# EUROPÄISCHE PATENTANMELDUNG

(11) **EP 1 881 302 A1**
(43) Veröffentlichungstag der Anmeldung: **23.01.2008**
(21) Anmeldenummer: 06015282.4
(22) Anmeldetag: 21.07.2006
(51) Int. Cl.: G01D 11/24

(54) **Hohlwellen-Drehgeber mit Motorwellen-Schutzklappe**

(71) Anmelder: Hengstler GmbH, 78554 Aldingen (DE)
(72) Erfinder: Grigo, Uwe, 78166 Donaueschingen (DE); Wöhrstein, Andreas, 78126 Neuhausen (DE)
(74) Vertreter: Riebling, Peter

(57) **Zusammenfassung**

Die Erfindung betrifft einen Hohlwellen-Drehgeber mit Motorwellen-Schutzkappe, wobei die Verbindung zwischen Motorwellen-Schutzkappe und Hohlwellen-Drehgeber über wiederholt lös- und verbindbare kraft- und/oder formschlüssige Verbindungsmittel über eine Relativbewegung zwischen Motorwellen-Schutzkappe und Hohlwellen-Drehgeber bewerkstelligt wird, und wobei der Hohlwellen-Drehgeber alle für die Aufnahme und Ausgabe der Messsignale elektrischen und mechanischen Bauteile beinhaltet und an der Motorwellen-Schutzkappe keinerlei elektrische oder mechanische Bauteile für die Aufnahme und Ausgabe der Messsignale befestigt sind. Der Hohlwellen-Drehgeber mit Motorwellen-Schutzkappe ist kostengünstiger und einfacher in Konstruktion, Herstellung, Montage, Lagerhaltung, Wartung und Reparatur, sowie einfacher in der Handhabung.

## Beschreibung

Die Erfindung betrifft einen Hohlwellen-Drehgeber mit Motorwellen-Schutzkappe nach dem Oberbegriff des Patentanspruches 1.

Derartige Hohlwellen-Drehgeber mit Motorwellen-Schutzkappe sind bereits zahlreich aus dem Stand der Technik bekannt, wobei die Motorwelle eines Motors, dessen Parameter wie z.B. Drehzahl oder Position bestimmt werden sollen, durch die Hohlwelle des Drehgebers geführt ist und dort gelagert ist. Der innere Lagerring der Hohlwelle des Drehgebers ist an der Motorwelle des Motors kraft- und/oder formschlüssig festgelegt und dreht mit gleicher Drehzahl mit, wobei der äußere Sensorring des Drehgebers feststeht. Durch die Relativdrehung des inneren Lagerrings zum feststehenden äußeren Sensorring des Drehgebers wird ein dem zu bestimmenden Parameter (z.B. Drehzahl oder Position Motorwelle) proportionales Messsignal erzeugt, welches über eine Schnittstelleneinheit des Drehgebers an eine externe Umform- und Auswerteeinheit ggf. mit Messsignalspeicher und -anzeige ausgegeben wird. Die Schnittstelleneinheit des Drehgebers ist im einfachsten Fall eine Steckkontaktleiste, kann aber auch bereits mit einer ersten internen Umformeinheit ausgestattet sein, oder sogar eine interne Auswerteeinheit enthalten, welche die externe Auswerteeinheit ersetzen kann.

Speziell bei Aufzugsmaschinen wird der Drehgeber am Motorende montiert und die Motorwelle selbst geht durch den Hohlwellendrehgeber hindurch. Bei rotierender Welle bietet die ungeschützte Welle eine Verletzungsgefahr. Aus diesem Grund wird auf den Drehgeber bzw. über die Welle eine Schutzkappe montiert, welche bisher beim Stand der Technik mit mehreren Schrauben befestigt wird. Da bei Ausfall der Maschine diese Welle dazu verwendet wird von Hand den Aufzug nach oben oder unten zu bewegen, muss die Schutzkappe vom Drehgeber wieder demontiert werden. Die Demontage der Kappe muss mit einem entsprechendem Werkzeug, insbesondere einem kleinen Schraubenschlüssel vorgenommen werden, was sehr mühsam und zeitintensiv ist.

Mit der DE 39 39 868 A1 ist ein Drehzahlaufnehmer für bürstenlose Motoren bekannt geworden, bei dem der Drehzahlaufnehmer mit seiner Hohlwelle über die Motorwelle aufgeschoben ist und über ein konisches Endstück kraftschlüssig mit der Motorwelle verbunden ist. Das konische Endstück ist über eine Schraube an der Stirnseite des freien Endes der Motorwelle mit dieser verbunden.

Verschiedenartige Bajonettverbindungen an Drehgebern sind z.B. aus der DE 199 23 900 A1, der DE 199 48 106 A1, der DE 196 41 929 A1, der DE 36 09 211 A1, bekannt geworden, bei denen jedoch die die Motorwelle abdeckende Abdeckung immer wesentliche Teile des Drehgebers beinhalten, wie z.B. Taktscheibe, Schnittstelleneinheit oder elektrische Anschlussleiste mit optischem Sensor. Nachteil ist, dass ein vordefinierter Winkelbereich als Relativlage zwischen der die Motorwelle abdeckenden Abdeckung und dem übrigen Drehgeber für die Montage eingehalten werden muss, was insbesondere bei schwer zugänglich oder schwer einsehbar positionierten Drehgebern hinderlich ist und somit zu Zeitverlusten bei der Montage und ggf. zu Beschädigungen des Drehgebers führen kann. Weiterhin ist nachteilig, dass bei einer Änderung der axialen Länge der Motorwelle auch die Abdeckung und/oder die übrige Basis des Drehgebers in der axialen Länge verändert werden müssen, was zu wesentlichen Kostennachteilen in Konstruktion, Herstellung, Montage und Lagerhaltung führt.

Aufgabe der vorliegenden Erfindung ist, einen gattungsgemäßen Hohlwellen-Drehgeber mit Motorwellen-Schutzkappe derart weiterzubilden, dass dieser kostengünstiger und einfacher in Konstruktion, Herstellung, Montage, Lagerhaltung, Wartung und Reparatur ist.

Zur Lösung der Aufgabe ist die Erfindung durch die Merkmale des Patentanspruchs 1 gekennzeichnet. Wesentliche Merkmale sind, dass die Verbindung zwischen Motorwellen-kappe und Hohlwellen-Drehgeber über wiederholt lös- und verbindbare kraft- und/oder formschlüssige Verbindungsmittel über eine Relativbewegung zwischen Motorwellen-Schutzkappe und Hohlwellen-Drehgeber bewerkstelligt wird, und dass der Hohlwellen-Drehgeber alle für die Aufnahme und Ausgabe der Messsignale elektrischen und mechanischen Bauteile beinhaltet und an der Motorwellen-Schutzkappe keinerlei elektrische oder mechanische Bauteile für die Aufnahme und Ausgabe der Messsignale befestigt sind.

Vorteil dabei ist, dass unabhängig von der axialen Länge des freien Endes der Motorwelle, ein Hohlwellen-Drehgeber mit allen nötigen elektrischen und mechanischen Bauteilen zur Aufnahme und Ausgabe der Messsignale verwendet werden kann und eine dementsprechend in der axialen Länge angepasste, einfache und kostengünstige Motorwellen-Schutzkappe. Somit kann für alle axialen Längen des freien Endes einer Motorwelle immer ein und derselbe Hohlwellen-Drehgeber eingesetzt werden und nur noch eine daraufhin in der axialen Länge angepasste Motorwellen-Schutzkappe wird benötigt. Der erfindungsgemäße Hohlwellen-Drehgeber mit Motorwellen-Schutzkappe wird dadurch in allen Bereichen wesentlich kostengünstiger, sowie einfacher in der Handhabung. Weiterer Vorteil ist, dass eine schnelle Demontage der Schutzkappe möglich ist, was gerade bei sicherheitsrelevanten Anwendungen, wie etwa im Evakuierungsfall bei Aufzügen sehr wichtig ist, wo quasi jede Sekunde zählt. D.h. es muss nicht lange nach einem Werkzeug gesucht werden, um die Schutzkappe zu demontieren.

Die Lösung ist eine integrierte Lösung im Drehgeber selbst, d.h. die Befestigung der Schutzkappe ist im Deckel bzw. der Kappe des Drehgebers integriert. D.h. auch, die Schutzkappe kann insbesondere ohne Werkzeug montiert und demontiert werden, dieses macht insbesondere ein Bajonettverschluss in der Kappe selbst möglich.

Die Art der Befestigung der Schutzkappe auf dem Drehgebergehäuse soll insbesondere ohne Werkzeug möglich sein, aber ansonsten nicht an eine spezielle Ausführungsform gebunden sein, so dass neben Bajonettverbindungen auch andere wiederholt lös- und verbindbare kraft- und/oder formschlüssige Verbindungsmittel vorgesehen sein können, wie z.B. Renkverbindungen, Klemmverbindungen, Rast-/Schnappverbindungen, Klettverschlüsse, wiederholt lös- und verbindbare Verklebungen z.B. mittels doppelseitigem ringförmigen Klebestreifen, direkte Gewindeverbindung zwischen Hohlwellen-Drehgeber und Motorwellen-Schutzkappe, Kniehebelverbindung, Splintverbindung, Wellen-Ösenscharnier-Verbindung, etc..

Insbesondere sind Hohlwellen-Drehgeber und Motorwellen-Schutzkappe axial stirnseitig aneinander gekuppelt, können jedoch in anderen Ausführungsformen an ihren jeweiligen Mänteln in Verbindung stehen. So kann der Hohlwellen-Drehgeber in einer axialen Ausnehmung in der Motorwellen-Schutzkappe mindestens teilweise aufgenommen sein und der Innenmantel der Motorwellen-Schutzkappe auf dem Außenmantel des Hohlwellen-Drehgebers aufliegen. Auch kann analog umgekehrt die Motorwellen-Schutzkappe mindestens teilweise in einer axialen Ausnehmung im Hohlwellen-Drehgeber aufgenommen sein und der Außenmantel der Motorwellen-Schutzkappe an einem Innenmantel des Hohlwellen-Drehgebers anliegen. Auch kann der stirnseitige freie Rand der Motorwellen-Schutzkappe in einer ringsumlaufenden Ringnut in der Stirnseite des Hohlwellen-Drehgebers aufgenommen sein und dort kraft- und/oder formschlüssig festliegen.

Ein weiteres Merkmal der Verschlussmöglichkeit eines Hohlwellendrehgebers kann auch jegliche andere geometrische Form der Schutzkappe sein. Also beispielsweise kürzere bzw. flachere Form um das hintere Wellenende des Drehgebers zu verschließen und/oder abzudichten.

Insbesondere ist aber die Motorwellen-Schutzkappe topfförmig ausgebildet und besitzt eine konisch sich vom Hohlwellen-Drehgeber weg zuspitzende Form. Die Form kann aber auch rein zylindrisch sein, halbkugel- oder teilkugelförmig, rotationselliptisch oder -parabolisch (Eiform) oder eine sonstige andere rotationssymmetrische topfartige Form.

Die Form des Gehäuses des Hohlwellen-Drehgeber ist dabei bevorzugt zylindrisch, wobei radial vom Außenmantel weg die elektrischen Anschlüsse für die Energieversorgung und die Signalleitungen ragen.

Im Folgenden wird die Erfindung anhand von lediglich einen Ausführungsweg darstellenden Zeichnungen näher erläutert. Hierbei gehen aus den Zeichnungen und ihrer Beschreibung weitere wesentliche Merkmale und Vorteile der Erfindung hervor.

Es zeigt:
Figur 1: Hohlwellen-Drehgeber mit Motorwellen-Schutzkappe nach der Erfindung im zusammengebauten Zustand in perspektivischer Ansicht;
Figur 2: Hohlwellen-Drehgeber nach der Erfindung in perspektivischer Ansicht;
Figur 3: Motorwellen-Schutzkappe nach der Erfindung in perspektivischer Ansicht;
Figur 4: Schnitt entlang der Längsachse durch den Hohlwellen-Drehgeber mit Motorwellen-Schutzkappe nach Figur 1;
Figur 5: Draufsicht auf den Hohlwellen-Drehgeber mit Motorwellen-Schutzkappe nach Figur 4.

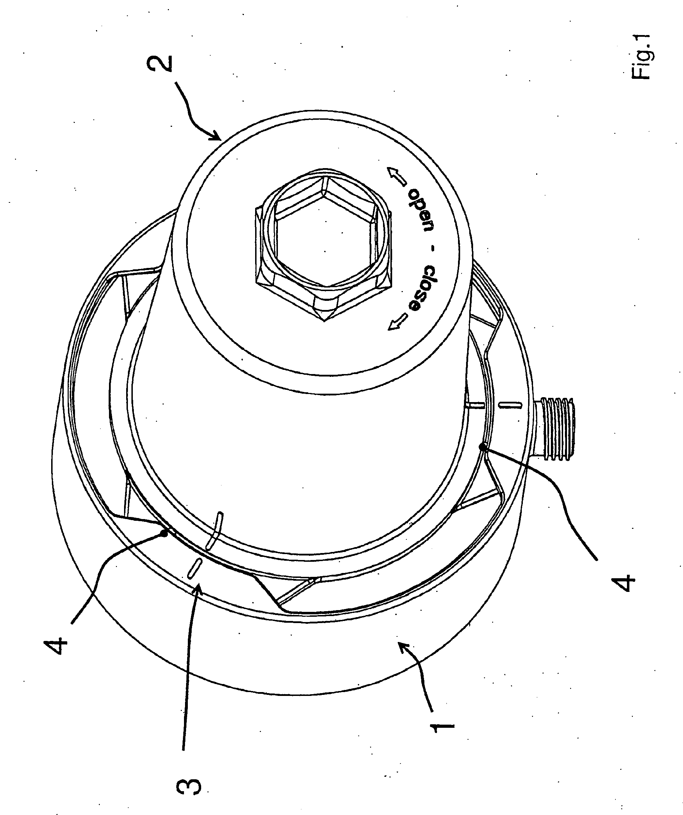

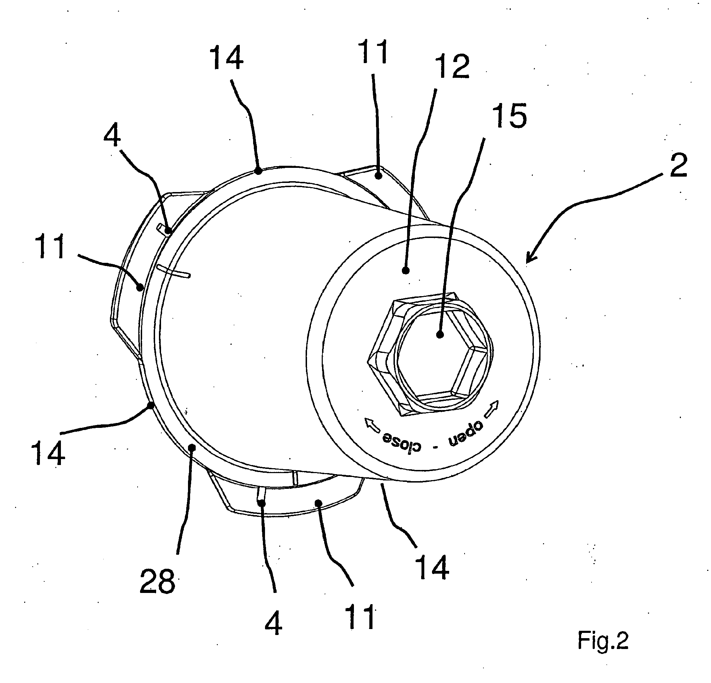

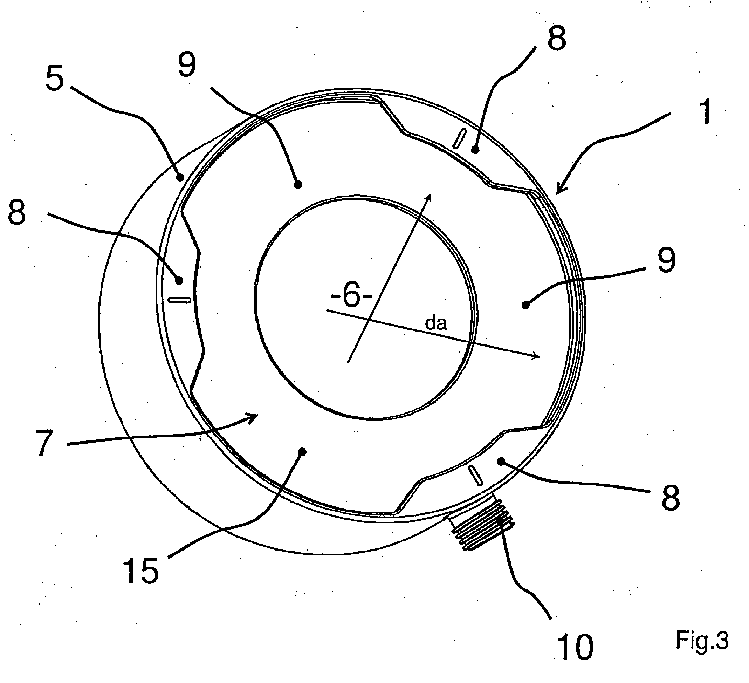

In Figur 1 ist der Hohlwellen-Drehgeber 1 mit Motorwellen-Schutzkappe 2 im zusammengebauten Zustand dargestellt, wobei die Motorwellen-Schutzkappe 2 über eine 3-flügelige Bajonettverbindung 3 mit dem Hohlwellen-Drehgeber 1 verbunden ist. Gemäß Figur 1 kann zur Montage die Motorwellen-Schutzkappe 2 in drei unterschiedlichen Positionen stirnseitig auf dem Hohlwellen-Drehgeber 1 aufgesetzt werden und dann in Uhrzeigerrichtung oder Gegenuhrzeigerrichtung verdreht werden, bis die Flügel 8, 11 (siehe Figuren 2 und 3) des Hohlwellen-Drehgebers 1 und der Motorwellen-Schutzkappe 2 axial übereinander zu liegen kommen und damit ein axiales Abziehen nicht mehr möglich ist. Zur weiteren Lagensicherung kann in der in Figur gezeigten Relativposition eine zusätzliche Verrastung 4 zwischen Hohlwellen-Drehgeber 1 und Motorwellen-Schutzkappe 2 vorgesehen sein.

Figur 2 zeigt nun den Hohlwellen-Drehgeber 1, der ein zylindrisches Gehäuse 5 beinhaltet, in dessen Innenraum die vollständigen elektrischen und mechanischen Bauteile für einen voll funktionsfähigen Hohlwellen-Drehgeber aufgenommen sind. Zentral mittig durch das Gehäuse 5 ist die Durchgangsöffnung 6 zur Aufnahme der Motorwelle (nicht dargestellt). In einer oder beiden Stirnseiten des zylindrischen Gehäuses 5 ist dann eine Vertiefung 7 für die Bajonettverbindung 3 vorhanden, die eingefräst oder im Spritzwerkzeug als "Negativ" eingebracht sein kann. Die Vertiefung 7 beinhaltet drei gleichmäßig über den Umfang verteilt angeordnete Flügel 8, die einen größeren Innendurchmesser "di" haben, als der Durchmesser der Durchgangsöffnung 6. Der Innendurchmesser di ist jedoch kleiner ist als der Außendurchmesser "da" der drei Ausbuchtungen 9 zum Einfädeln der Flügel 11 (siehe Fig. 3) der Motorwellen-Schutzkappe 2.

Auf dem Mantel des Hohlwellen-Drehgebers 1 ist der Abgang und Zugang 10 für die elektrischen Leitungskabel vorgesehen zur Zuführung der eventuell nötigen el. Energie und zum Abführen der im Drehgeber 1 erzeugten Messsignale. Der Abgang und Zugang 10 für die elektrischen Leitungskabel ist hier beispielhaft mit einem Gewinde zur Kupplung an ein Übertragungskabel und eine Umform- und Auswerteeinheit (nicht gezeigt) ausgestattet, kann aber in anderen Ausführungsformen beliebig anders gestaltet sein, so z.B. als reibschlüssige Steckverbindung oder als geschraubte oder geklemmte Lüsterklemme.

Figur 3 zeigt nun die Motorwellen-Schutzkappe 2, die eine topfförmige Grundform aufweist, wobei sich von einer kreisförmigen Basisscheibe 12 ein konusförmiger Mantel 13 axial in Richtung auf einen radialen Ansatz in Form der drei Flügel 11 sich öffnend erstreckt. Die drei Flügel 11 sind gleichmäßig am Umfang angeordnet, zwischen denen sich drei Ausnehmungen 14 befinden. Auf der Basisscheibe 12 ist ein Sechskant 15 zur Aufnahme eines Werkzeugs bei der Montage/Demontage vorhanden, falls dies nötig sein sollte, z.B. nach einer langen Betriebsdauer ohne Abnahme der Motorwellen-Schutzkappe 2.

Als Verrastung 4 sind auf den Flügeln axial eingeprägte Rippen vorhanden, die sich dann axial an der Unterseite der Flügel 3 des Hohlwellen-Drehgebers 1 anlegen.

Natürlich können auch nur zwei oder mehr als drei Flügel 8, 11 der Bajonettverbindung 3 vorhanden sein, je nach Anforderungen, bevorzugt sind aber drei Flügel 8 am Hohlwellen-Drehgeber 1 und drei Flügel 11 an der Motorwellen-Schutzkappe 2. Die Flügel 8, 11 müssen auch nicht notwendiger Weise über den Umfang gleichmäßig verteilt sein, sondern können auch andere Winkel als 120° (3 Flügel), 180°(2 Flügel), 90° (4 Flügel), 60° (6 Flügel) zwischen sich einschließen.

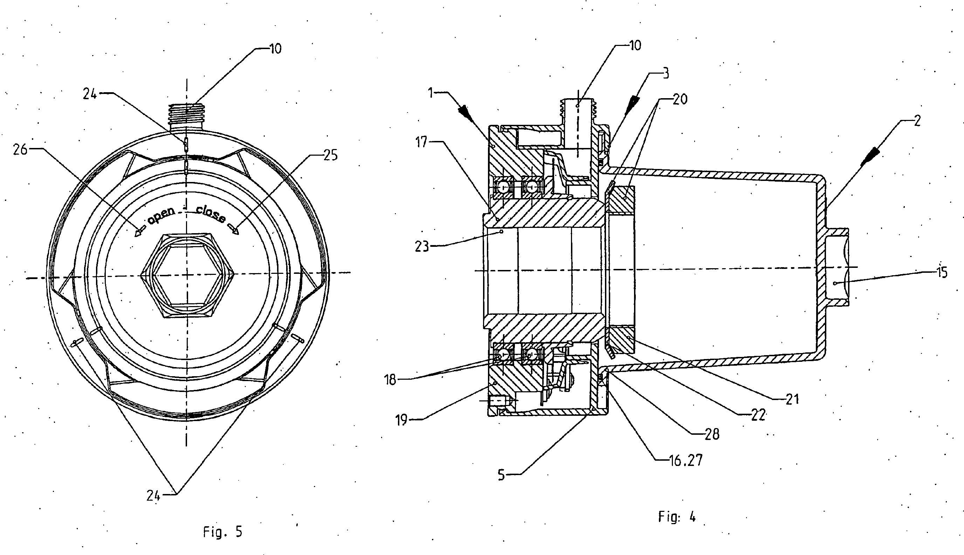

In Figur 4 ist ein Längsschnitt durch Figur 1 gezeigt, wobei zu sehen ist, dass zwischen Hohlwellen-Drehgeber 1 und Motorwellen-Schutzkappe 2 im Bereich der Bajonettverbindung 3 ein O-Ring 16 als Dichtung eingebracht ist, der in einer Ringnut 27 liegt, die sich im ringförmigen Übergangsbereich 28 zwischen Mantel 13 und Flügeln 11 bzw. Ausnehmungen 14 befinden.

Der Hohlwellen-Drehgeber 1 besitzt die hohle Geberwelle 17, die über zwei Kugellager 18 drehbar zum Stator 19 des Hohlwellen-Drehgeber 1 gelagert ist. Der auf der Motorwelle aufgeschobene Hohlwellen-Drehgeber 1 ist hier z.B. stirnseitig über eine Wellenbefestigung 20 mit Gewindescheibe 21 und Sicherungsring 22 gegen axiales Abziehen auf der Motorwelle (nicht gezeigt) befestigt. Eine zusätzliche Verdrehsicherung (z.B. Federkeil) des Hohlwellen-Drehgebers 1 auf der Motorwelle kann vorgesehen sein, zusätzlich zum kraftschlüssigen Sitz 23. Natürlich sind auch andere Befestigungsarten des Hohlwellen-Drehgeber 1 auf der Geberwelle 17 möglich, so z.B. mit sogenannten Drehmomentstützen.

Figur 5 zeigt noch die Draufsicht auf Figur 1 bzw. Seitenansicht von rechts auf Figur 4. Mit Position 24 ist eine weitere Verrastung auf den Unterseiten der Flügel 8 des Hohlwellen-Drehgebers 1 gezeigt, zusätzlich oder alternativ zu der Verrastung auf den Flügeln 11 der Motorwellen-Schutzkappe. Es kann hierdurch auch ein Schließrichtung 25 und Öffnungsrichtung 26 festgelegt sein, aber auch ein Durchdrehen in beiden Richtungen möglich sein.

### Figurenlegende

1. Hohlwellen-Drehgeber
2. Motorwellen-Schutzkappe
3. Bajonettverbindung zwischen 1 und 2, auf 2
4. Verrastung zwischen 1 und 2
5. Gehäuse von 1
6. Durchgangsöffnung in 5
7. Vertiefung
8. Flügel von 1
9. Ausbuchtung von 1
10.Zu- und Abgang für el. Kabel
11. Flügel von 2
12. Basisscheibe
13. Konusmantel
14.Ausnehmung
15. Werkzeugansatz
16. O-Ring
17. Geberwelle (hohl)
18. Kugellager
19. Stator von 1
20. Wellenbefestigung
21. Gewindescheibe
22. Sicherungsring
23. Kraftschlüssiger Sitz
24. Verrastung zwischen 1 und 2, auf 1
25. Schließrichtung von 3
26.Öffnungsrichtung von 3
27. Ringnut für 16 in 2
28. ringförmiger Übergangsbereich zwischen 13 und 11 bzw. 14
di: Innendurchmesser von 7 bzw. 8
da: Außendurchmesser von 7 bzw. 9

## Patentansprüche

1. Hohlwellen-Drehgeber (1) mit Motorwellen-Schutzkappe (2), die miteinander über kraft- und/oder formschlüssige Verbindungsmittel (3) über eine Relativbewegung zwischen Motorwellen-Schutzkappe (2) und Hohlwellen-Drehgeber (1) wiederholt lös- und verbindbar sind, wobei der Hohlwellen-Drehgeber (1) alle für die Aufnahme und Ausgabe der Messsignale elektrischen und mechanischen Bauteile beinhaltet und an der Motorwellen-Schutzkappe (2) keinerlei elektrische oder mechanische Bauteile für die Aufnahme und Ausgabe der Messsignale befestigt sind.

2. Hohlwellen-Drehgeber (1) mit Motorwellen-Schutzkappe (2) nach Anspruch 1, **dadurch gekennzeichnet, dass** die Verbindungsmittel (3) im Hohlwellen-Drehgeber (1) und der Motorwellen-Schutzkappe (2) integriert sind.

3. Hohlwellen-Drehgeber (1) mit Motorwellen-Schutzkappe (2) nach Anspruch 1 oder 2, **dadurch gekennzeichnet, dass** die Verbindungsmittel (3) eine Bajonettverbindung oder Renkverbindung oder Klemmverbindung oder Rast-/Schnappverbindung oder Klettverschlußverbindung oder wiederholt lös- und verbindbare Klebeverbindung oder direkte Gewindeverbindung zwischen Hohlwellen-Drehgeber (1) und Motorwellen-Schutzkappe (2) ist.

4. Hohlwellen-Drehgeber (1) mit Motorwellen-Schutzkappe (2) nach Anspruch 3, **dadurch gekennzeichnet, dass** die Bajonettverbindung (3) Flügel (8, 11) am Hohlwellen-Drehgeber (1) und an der Motorwellen-Schutzkappe (2) aufweist, die im Montagezustand zusammenwirken und damit ein axiales Abziehen der Motorwellen-Schutzkappe (2) von dem Hohlwellen-Drehgeber (1) verhindern.

5. Hohlwellen-Drehgeber (1) mit Motorwellen-Schutzkappe (2) nach Anspruch 1, **dadurch gekennzeichnet, dass** die Verbindungsmittel (3) eine Kniehebelverbindung oder Splintverbindung oder Wellen-Ösenscharnier-Verbindung ist, unter Zuhilfenahme weiterer Bauteile wie Kniehebel, Splint oder Wellen-Ösenscharnier.

6. Hohlwellen-Drehgeber (1) mit Motorwellen-Schutzkappe (2) nach einem der Ansprüche 1 bis 5, **dadurch gekennzeichnet, dass** Hohlwellen-Drehgeber (1) und Motorwellen-Schutzkappe (2) axial stirnseitig aneinander gekuppelt sind.

7. Hohlwellen-Drehgeber (1) mit Motorwellen-Schutzkappe (2) nach einem der Ansprüche 1 bis 6, **dadurch gekennzeichnet, dass** Hohlwellen-Drehgeber (1) und Motorwellen-Schutzkappe (2) radial mantelseitig aneinander gekuppelt sind.

8. Hohlwellen-Drehgeber (1) mit Motorwellen-Schutzkappe (2) nach einem der Ansprüche 1 bis 7, **dadurch gekennzeichnet, dass** die Motorwellen-Schutzkappe (2) topfförmig ausgebildet ist.

9. Hohlwellen-Drehgeber (1) mit Motorwellen-Schutzkappe (2) nach Anspruch 8, **dadurch gekennzeichnet, dass** die Motorwellen-Schutzkappe (2) konisch ausgebildet ist und eine sich vom Hohlwellen-Drehgeber (1) weg zuspitzende Form aufweist.

10. Hohlwellen-Drehgeber (1) mit Motorwellen-Schutzkappe (2) nach Anspruch 8, **dadurch gekennzeichnet, dass** die Motorwellen-Schutzkappe (2) rein zylindrisch oder halbkugel- oder teilkugelförmig oder rotationselliptisch oder-parabolisch (Eiform) ist, oder eine sonstige andere rotationssymmetrische topfartige Form aufweist.

11. Hohlwellen-Drehgeber (1) mit Motorwellen-Schutzkappe (2) nach einem der Ansprüche 1 bis 10, **dadurch gekennzeichnet, dass** das Gehäuse (5) des Hohlwellen-Drehgebers (1) eine zylindrische Grundform aufweist.

12. Hohlwellen-Drehgeber (1) mit Motorwellen-Schutzkappe (2) nach einem der Ansprüche 1 bis 11, **dadurch gekennzeichnet, dass** der Zu- und Abgang (10) für die elektrischen Leitungen zum und vom Hohlwellen-Drehgeber (1) über eine Schraubverbindung oder eine reibschlüssige Steckverbindung oder eine geschraubte/geklemmte Lüsterklemme erfolgt.

13. Hohlwellen-Drehgeber (1) mit Motorwellen-Schutzkappe (2) nach einem der Ansprüche 1 bis 12, **dadurch gekennzeichnet, dass** der Zu- und Abgang (10) für die elektrischen Leitungen zum und vom Hohlwellen-Drehgeber (1) etwa radial oder schräg oder axial über eine L-förmige Winkelverbindung vom Mantel des Gehäuses (5) aus sich weg erstrecken.

14. Hohlwellen-Drehgeber (1) mit Motorwellen-Schutzkappe (2) nach einem der Ansprüche 1 bis 13, **dadurch gekennzeichnet, dass** zwischen Hohlwellen-Drehgeber (1) und Motorwellen-Schutzkappe (2) ein Dichtring (16) eingebracht ist.

15. Hohlwellen-Drehgeber (1) mit Motorwellen-Schutzkappe (2) nach Anspruch 14, **dadurch gekennzeichnet, dass** der Dichtring (16) in einer Ringnut (27) im Hohlwellen-Drehgeber (1) und/oder in der Motorwellen-Schutzkappe (2) liegt.
